# EUROPEAN PATENT SPECIFICATION

(11) **EP 1 802 874 B1**
(45) Date of publication and mention of the grant of the patent: **12.10.2011**
(21) Application number: 05737980.2
(22) Date of filing: 12.05.2005
(51) Int. Cl.: F16C 1/22

(54) **ADJUSTABLE COMMAND CABLE TERMINAL**
VERSTELLBARER STEUERKABELANSCHLUSS
BORNE DE CÂBLE RÉGLABLE

(30) Priority: 25.08.2004 BR PI0403739
(43) Date of publication of application: 04.07.2007
(73) Proprietor: Paparoni, Paolo, CEP-09850-300 Sao Bernando Do Campo (BR)
(72) Inventor: Paparoni, Paolo, CEP-09850-300 Sao Bernando Do Campo (BR)
(74) Representative: Elzaburu Marquez, Alberto
(86) International application number: PCT/BR2005/000080
(87) International publication number: WO 2006/021060

(56) References cited:
- EP-A1- 0 431 307
- US-A- 3 191 972

## Description

The object of the invention is a fixing system for command cable terminals and, specifically, a new fixing device for command cable terminals, be them simple or double action (push-pull), enabling to regulate and fix said cables to the corresponding command elements by means of a simple manual rotation movement.

### DESCRIPTION OF THE RELATED ART

In the current state of the art, there are various applications of flexible cables to precisely transmit command forces and movements from the transmitting mechanical element to the receiving mechanical element, especially in cases where the localization of said elements does not allow direct connection between them.

In the automobile industry, such command transmission cables are traditionally used to transmit e. g. commands from the clutch pedal to the clutch itself, or to send switch gear commands to the gear box. The system is especially indicated in cases where there are obstructions in the connection path between the transmitting element and the receiving element.

A single action (pull) or double action (push-pull) transmitting cable is constituted by an especially manufactured internal flexible cable which, in case of single action, just enables the transmission of traction forces and, in case of double action, may transmit traction and compression forces. An external cover conduit or sheath, which is also flexible, contains said internal cable, sliding within it with minimum clearance. The constant linear measurements of both elements alongside the cable axis determines the precision for movement transmissions.

Generally, both ends of the internal cable have terminals allowing its hinged connection to the transmitting element and the receiving element for the movement and both ends of the external cover have fixing means to the supports of the corresponding terminals.

Due to its own structure and under the action of working efforts, as well as the ageing of materials due to temperature fluctuations, the internal cable and the external cover are subject to small plastic deformations changing the length of said elements, and a periodical correction of the length of the cable becomes required. Also, the relative distance between the mechanical elements connected by the cable is subject to the effects of tolerances from the whole chain of components and supports existing between said elements and therefore cannot be precisely predetermined.

The effects of the above referenced factors require the presence of a system allowing to regulate the length of the cable and its fixing to the corresponding terminal elements at the time of assembly and during the working life of said cable to compensate length variations while in use.

Various kinds of transmission cables which length can be regulated are used for this purpose, including elements fixing the correct length after regulation. In a widely used regulation and fixing system, the end of the cable is fixed to a screwed shaft and the internally screwed terminal element is turned over the screw of said shaft, axially displacing it and thus allowing to regulate the length of the cable. The correct position, once reached, is fixed by means of a counterscrew.

Regulation and fixing as described above offer difficulties, since they must frequently be made in badly accessible layouts. Screw adjustment and especially counterscrew pressure require in these cases the use of two overlaid tools and the access of both hands of the adjuster within the limited available space make such regulation very complex, time-taking and expensive. The safety of the operation is also prejudiced by the difficulty to guarantee the correct pressure torque for the counterscrew under the described conditions.

There are currently various devices developed to avoid the above inconveniences, in which the regulation and fixing of the final length of the cable is made by means of axial, or axial and radial conjugated movements, which however generally require the use of both hands and frequently demand the use of supporting tools.

EP431 307 discloses a fixing device in accordance with the preamble of claim 1.

### SUMMARY OF THE INVENTION

Due to the above considerations, there is the requirement to develop an adjustment and fixing system for cable lengths to allow to connect them to the corresponding mechanical command elements quickly and property, thus offering guarantees against the possibility of failure of said fixing under any working condition.

The solution presented herein by claim 1 is a simple, efficient and low-cost fixing device which, within less than half turn of the fixing device, allows to release the cable, define its length and fix it again.

With the device as presented herein, the operation requires only one adjuster's hand and no help of any kind of tool is required, thus allowing to manipulate the device even in hardly accessed places.

The device as presented by this invention is constituted by an externally cylindrical glove which, when turned by the hand of the adjuster, allows to fix or loose the cable terminal shaft to be introduced within its center.

The internal axial hole of the glove presents variable radius opening which, in a given path, makes use of an Archimedes curve type profile. Said opening is in sliding contact with a radially displaceable pressure actuator, so that the actuator gets closer or more distant from the cable terminal shaft with a movement which is not proportional to the rotation angle of the glove.

Said variable radius opening of the internal axial hole of the glove is constituted by various successive sectors, preferably with the following functions:
- a first scape zone for the cable terminal shaft guarantees the widest possible opening of the internal hole, allowing the free axial displacement of the cable terminal shaft. In this stage, the correct position of the cable is automatically adjusted, thus corresponding to the point where, at the neutral command position, cable axial forces are null;
- a second quick approximation zone for the blocking organ, in which the space for the free movement of said shaft is even reduced;
- a third zone is a strongly incremented pressure slope, to quickly increase the blocking force of the cable terminal shaft.

The quick reduction of the radius of the internal hole of the glove, as obtained in this zone by means of an Archimedes curve, exerts force multiplying action to guarantee strong shaft retention pressure;
- a final blocking zone with minimum pressure increment to guarantee the irreversibility of the final pressure and compensate manufacturing tolerances for the various components. The final blocking pressure is also a function of a small elastic deformation of the elastoplastic material of the glove and pressure actuator.

The whole sequence above is made in less than half turn of the glove of the fixing device, thus allowing quick fixing to the adjuster.

To assure cable blocking, the external surface of the end of the terminal shaft of the same cable, as well as the corresponding internal surface of the device receiving said shaft are formed by multiple annular threads with large retention capacity. Therefore, in the fixing position of the device, the threaded surface of the shaft is engaged by the threads of the corresponding device surface.

Besides the above described controlled locking, the device as presented herein offers visual and auditive safety locking, assured by a curved elastic element located externally to the device, which is locked by the adjuster in a radial pin integrated to the terminal body.

In summary, the advantages of the device object of the present invention are the following:
- the fixing device is simple, compact, efficient and low-cost;
- in less than half turn of the glove, the fixing device allows to release the cable, define its length and fix it again;
- it allows to quickly regulate and fix the cable by using one single hand of the operator and with a simple manual rotation movement;
- no help of any kind of tool is required, thus allowing to manipulate the device even in hardly accessed layouts.

The result is a more simple, quicker and safer operation for the assembly and regulation of the command cable system, thus causing considerable reduction in operation costs. One of the most useful practical results is that the system allows for regulation in small spaces more safely than the previous ones.

### DESCRIPTION OF FIGURES

The features, purpose and advantages of the new fixing device for command cable terminals as presented by the invention become clearer from the detailed disclosure of the attached drawings, which represent illustratively but not limitatively the embodiment of a fixing system for command cables, in which:
Figure 1 is a perspective view of the new fixing device set for command cable terminals as presented by this invention;
Figure 2 is a perspective view of the external glove of the new device;
Figure 3 is a perspective view of the internal terminal of the same device;
Figure 4 shows the pressure actuator of the same device;
Figure 5 shows the pressure actuator as assembled over the internal terminal;
Figure 6 is a lengthwise section of the device, showing its operation;
Figure 7 is a schematic representation of the profile of the internal axial hole of the glove.

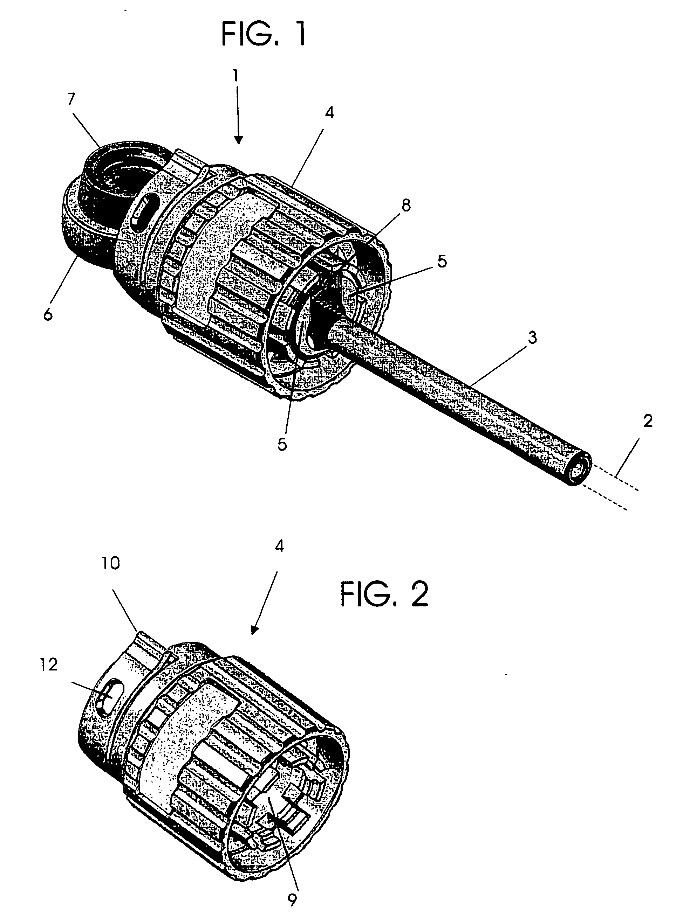

More specifically referring to the drawings, Figure 1 shows the fixing device set 1 which, while in operation, transmits the movement and command force from the transmitting element (not shown in the drawing) to the flexible internal cable 2, fixed to the shaft 3 and, through this cable, to the receiving command element on the other end of the cable 2.

Upon the assembly of the command system, or when a readjustment of the cable size is required, the fixing device set 1 has the purpose to leave free movement to the shaft 3, solidary to the flexible cable 2. After the cable 2 length is readjusted, the shaft 3, solidary to the cable 2, should again be fixed to the fixing device 1.

In the same figure 1, the components of the fixing device set 1 can be located: the shaft 3, the glove 4; the internal terminal 5 with its annular head 6 solidary to it, and the spherical bush 7, which is contained within said annular head 6. The central hole of the spherical bush 7 is hinged to the command transmitting element, not shown in the drawings.

The end of the pressure actuator 8 can also be seen on Figure 1, radially sliding within the tearing of the internal terminal 5 tigthening or loosing the shaft 3 and thus causing the fixing or free movement of the cable 2.

Figure 2 shows the glove 4 of the fixing device 1. The grooves of its external surface can be noticed, thus facilitating the application of hand force by the adjuster.

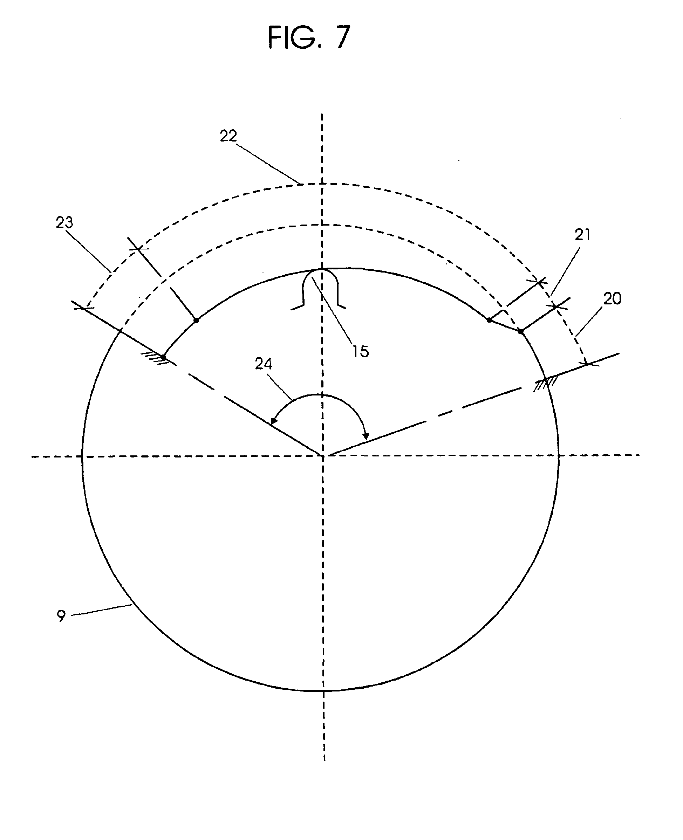

The internal axial hole 9 of said glove, which remains in contact with the pressure actuator 8, presents circular profile with variable radius which, in a given path, is defined by an Archimedes curve type. Therefore, the radius of said internal axial hole 9 is non-uniformly reduced more and more, thus creating angular zones which purposes were already previously explained in this description and will be shown in a scheme further below on Figure 7.

The rotation of the glove 4, activated by the hand of the adjuster, determines the radial position of the pressure actuator 8, which gets closer or far from the shaft 3, depending on the sense and the rotation angle of said glove 4.

On the final angular tightening zone, or on the fixing zone between the pressure actuator 8 and the shaft 3, the curvature radius of the Archimedes curve is such to guarantee the irreversibility of the final tightening, thus guaranteeing to fix the command cable 2.

Besides this guarantee, the glove 4 has a safety lock 10 solidary to said glove. This lock is applied by the adjuster, by fitting the pin 11 of the internal terminal 5 to the oblong hole 12 of the safety lock 10.

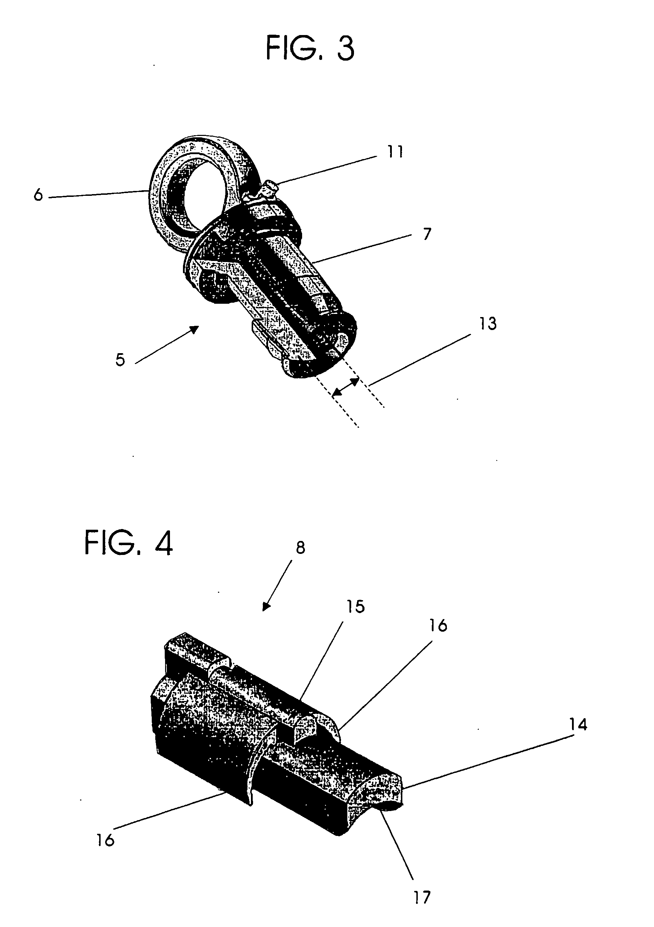

Figure 3 shows the internal terminal 5 with its annular head 6 and cylindrical body 7. Said cylindrical body has a lengthwise opening 13 with parallel walls, between which the shoe 14 of the pressure actuator 8 fits and radially slides as a function of the request received by turning the glove 4.

The pressure actuator 8 as shown by Figure 4, which is made of highly resistant elastoplastic material, is constituted by the shoe 14, which applies the fixing pressure over the shaft 3, the central support 15 and both wing-shaped springs 16. The pressure exerted by the internal profile of the glove 4 over the central support 15 of the pressure actuator 8 is in contrast with the action of both springs 16 which, by opening in contact with the cylindrical body 7 of the internal terminal 5, force the pressure actuator 8 to a wider opened position.

In the final blocking position, the locking force of the pressure actuator 8 over the shaft 3 is exerted by the lengthwise concave surface 17 of the shoe 14.

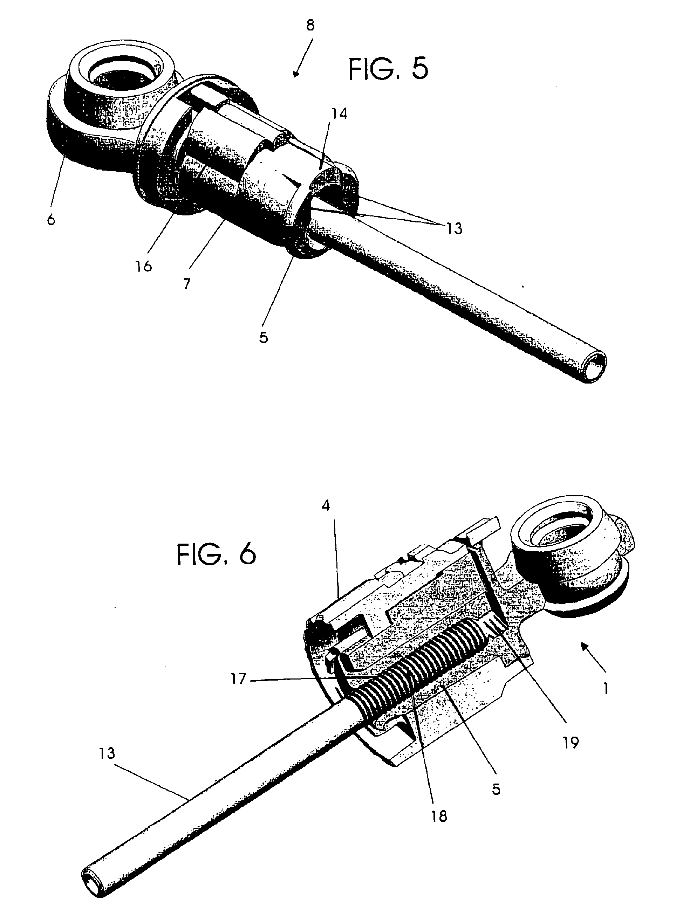

The set of pressure actuator 8 as assembled on the internal terminal 5 is shown by Figure 5, showing the shoe 14 of the pressure actuator 8 fitted sliding to the lengthwise opening 13 of the internal terminal 5. The same Figure 5 also shows one of the two springs 16 in contact with the cylindrical body 7 of the internal terminal 5, in opposition to the closing movement of the shoe 14.

The lengthwise section of Figure 6 shows the device set 1 in its final fixing position to the shaft 3, solidary to the cable 2. We can observe in this figure that, to assure efficient locking of the shaft 3 to the fixing device 1, the whole external diameter 18 of the final path of the shaft 3 and the internal semidiameter 19 of the internal terminal 5 are formed by multiple annular threads with large retention capacity.

Therefore, in the fixing position of the device (1), the thread surface of the shaft (3) is engaged by the threads (19) of the internal terminal (5).

Figure 7 schematically shows the profile of the internal axial hole 9 of the glove 4. Said profile is always in contact with the central support 15 of the pressure actuator 8. Any variation in the radius of said profile radially moves the actuator 8, getting it closer or far from the shaft 3 and applying over it the fixing force of the cable 2.

To reach the operation of the fixing device as presented by this invention, the active part of the profile of the internal axial hole 9 is constituted by successive sectors with variable radius, as shown by Figure 7, with different purposes:
- a first sector 20 with larger radius of the hole 9 provides the shaft with more freeness, allowing to adjust the length of the cable 2;
- a second sector 21 is a part of the profile presenting quick radius reduction to get the actuator 8 near to the shaft 3;
- in a third sector 22, the profile is given by an Archimedes curve which, progressively reducing the radius, quickly increases the blocking force of the terminal shaft 3 of the cable 2;
- a fourth sector 23 constitutes a blocking region, with minimum reduction of the radius and a minimum increment of shaft 3 tightening, thus guaranteeing irreversible operation.

The whole adjustment and fixing operation of the command cable 2 is effected within the space of the four above described sectors and the corresponding rotation angle 24 of the glove 4. This rotation angle, as we can see from the scheme on Figure 7, is less than half the internal axial hole 9, i. e. a half-turn of the glove 4.

To release the shaft 3 and the cable 2 solidary to it, the adjuster releases the safety lock 10 of the pin 11 and applies to the glove 4 corresponding rotation inversely to the applied sense to lock the shaft 3.

We can also notice that the fixing and regulation system of this invention allows the use of transmission cables with fixed length, which are more simple, economical and safer.

From the above explanations, it becomes clear that the new features presented by this invention make it a lot easier to assemble and regulate the whole mechanical command transmission system by means of cables, especially under difficult access conditions of the elements linked by the cable, offer better safety to the operation of the command system and allow considerable reduction of operation times and costs.

We can understand that the presented solution may suffer amendments and variations in its way of realization, as long as it does not go beyond the object of the invention, as expressed in the following claims.

## Claims

1. Fixing device (1) for command cable terminals which allows to regulate and fix the length of single or double-action flexible cables, used for the transmission of commands from an emitting mechanical element to a receiving mechanical element, in which said fixing device (1) is comprised by a glove (4), inside which an internal terminal (5) and a pressure actuator (8) are assembled, which due to the rotation of the glove (4) slides radially within a lengthwise opening (13) with parallel walls of the internal terminal (5) so to lock or release a shaft (3) which is solidary to the cable (2), thereby providing to fix or release said command cable (2) depending on the rotation sense of the glove (4) manually actuated by the operator,
**characterized in that** the glove (4) has an internal axial hole (9) with a variable radius portion thereof in contact with the pressure actuator (8), the variable radius following an Archimedes-type curve.

2. Fixing device for command cable terminals according to claim 1, wherein the central support (15) of the pressure actuator (8) is always kept in contact with the variable radius portion of the internal axial hole (9) of said glove (4) by the action of two wing-shaped springs (16) of the pressure actuator (8) on the cylindrical body (7) of the internal terminal (5) so that the distance between the concave surface (17) of a shoe (14) of the pressure actuator (8) and the shaft (3) is determined by the radius of the internal axial hole (9) of the glove (4).

3. Fixing device for command cable terminals according to claims 1 or 2, wherein the variable radius portion of the internal axial hole (9) of the glove (4) comprises a plurality of successive angular sectors.

4. Fixing device for command cable terminals according to claim 3, wherein the variable radius portion of the internal axial hole (9) of the glove (4) comprises a first angular sector (20) having the largest radius, thereby allowing the length of cable (2) to be adjusted.

5. Fixing device for command cable terminals according to claim 4, wherein the variable radius portion of the internal axial hole (9) of the glove (4) comprises a second angular sector (21) presenting a quick radius reduction, thereby allowing the actuator (8) to get near to the shaft (3);

6. Fixing device for command cable terminals according to claim 5, wherein the variable radius portion of the internal axial hole (9) of the glove (4) comprises a third angular sector (22) having the said progressively-reducing radius following an Archimedes-type curve, thereby quickly increasing the blocking force of the shaft (3) of the cable (2).

7. Fixing device for command cable terminals according to claim 6, wherein the variable radius portion of the internal axial hole (9) of the glove (4) comprises a fourth angular sector (23) having a minimum radius reduction and thereby a minimum increment in the tightening of shaft (3), so that an irreversible operation is guaranteed.

8. Fixing device for command cable terminals according to any of the claims 4 to 7, wherein the whole sequence of angular sectors takes up less than half turn of the glove (4), thereby allowing the operator's hand to perform the whole fixing operation in one single hand movement.

9. Fixing device for command cable terminals of any one of claims 1 to 8, wherein a safety lock (10) solidary to the glove (4) is self-activated at the end of the operation to fix the command cable (2) until the pin (11) of the internal terminal (5) is fitted within the oblong hole (12) of the safety lock (10).

10. Fixing device for command cable terminals according to any one of claims 1 to 8, wherein the external diametric surface of the end portion of the shaft (3), as well as the internal semi-diametric surface (19) of the internal terminal (5), are comprised by multiple annular threads with large retention capacity and which, in the fixing position of the device (1), the surface threads of the shaft (3) are fitted between the threads of the internal terminal (5), thereby providing the shaft (3), solidary to the command cable (2), with a high blocking resistance.

## Patentansprüche

1. Befestigungsvorrichtung (1) für Steuerleitungsanschlüsse, die erlaubt, die Länge von einfach- oder zweifach-wirkenden biegsamen Leitungen einzustellen und festzulegen, welche zur Übertragung von Steuerbefehlen von einem aussendenden mechanischen Element zu einem empfangenden mechanischen Element verwendet werden, wobei die Befestigungsvorrichtung (1) einen Handschuh (4) aufweist, in den ein innerer Anschluss (5) und ein Druckbetätiger (8) eingebaut sind, welcher aufgrund der Rotation des Handschuhs (4) radial in einer längsgerichteten Öffnung (13) mit parallelen Wänden des inneren Anschlusses (5) gleitet, sodass ein Schaft (3), der zur Leitung (2) gehört, arretiert oder gelöst wird, wodurch vorgesehen wird, die Steuerleitung (2) in Abhängigkeit von dem Rotationssinn des Handschuhs (4), der manuell vom Bediener betätigt wird, zu befestigen oder zu lösen,
**dadurch gekennzeichnet, dass** der Handschuh (4) ein inneres axiales Loch (9) mit einem variablen Radius-Abschnitt davon in Kontakt mit dem Druckbetätiger (8) aufweist, wobei der variable Radius einer Kurve der Archimedes-Art folgt.

2. Befestigungsvorrichtung für Steuerleitungsanschlüsse nach Anspruch 1, bei der die zentrale Auflage (15) des Druckbetätigers (8) immer in Kontakt mit dem variablen Radius-Abschnitt des inneren axialen Lochs (9) des Handschuhs (4) durch das Einwirken von zwei flügelförmigen Federn (16) des Druckbetätigers (8) auf dem zylindrischen Körper (7) des inneren Anschlusses (5) bleibt, sodass der Abstand zwischen der konkaven Oberfläche (17) eines Schuhs (14) des Druckbetätigers (8) und des Schafts (3) durch den Radius des inneren axialen Lochs (9) des Handschuhs (4) bestimmt ist.

3. Befestigungsvorrichtung für Steuerleitungsanschlüsse nach Ansprüchen 1 oder 2, bei welcher der variable Radius-Abschnitt des inneren axialen Lochs (9) des Handschuhs (4) mehrere nachfolgende Winkelsektoren aufweist.

4. Befestigungsvorrichtung für Steuerleitungsanschlüsse nach Anspruch 3, bei welcher der variable Radius-Abschnitt des inneren axialen Lochs (9) des Handschuhs (4) einen ersten Winkelsektor (20) mit dem größten Radius aufweist, wodurch die Länge der Leitung (2) eingestellt werden kann.

5. Befestigungsvorrichtung für Steuerleitungsanschlüsse nach Anspruch 4, bei welcher der variable Radius-Abschnitt des inneren axialen Lochs (9) des Handschuhs (4) einen zweiten Winkelsektor (21) aufweist, der eine schnelle Radiusreduktion bietet, wodurch der Aktuator (8) näher an den Schaft (3) kommen kann.

6. Befestigungsvorrichtung für Steuerleitungsanschlüsse nach Anspruch 5, bei welcher der variable Radius-Abschnitt des inneren axialen Lochs (9) des Handschuhs (4) einen dritten Winkelsektor (22) mit dem zunehmend reduzierenden Radius aufweist, der einer Kurve der Archimedes-Art folgt, wodurch schnell die Blockierkraft des Schafts (3) des Kabels (2) erhöht wird.

7. Befestigungsvorrichtung für Steuerleitungsanschlüsse nach Anspruch 6, bei welcher der variable Radius-Abschnitt des inneren axialen Lochs (9) des Handschuhs (4) einen vierten Winkelsektor (23) aufweist, der eine minimale Radiusreduktion und dadurch einen minimalen Zuwachs des Festziehens des Schafts (3) aufweist, sodass eine irreversible Bedienung garantiert wird.

8. Befestigungsvorrichtung für Steuerleitungsanschlüsse nach einem der Ansprüche 4 bis 7, bei der die ganze Abfolge von Winkelsektoren weniger als eine halbe Drehung des Handschuhs (4) benötigt, wodurch die Hand des Bedieners die ganze Befestigungsbedienung in einer Einhand-Bewegung durchführen kann.

9. Befestigungsvorrichtung für Steuerleitungsanschlüsse nach einem der Ansprüche 1 bis 8, bei der eine
Sicherheitsarretierung (10), die zu dem Handschuh (4) gehört, beim Ende der Bedienung selbst-aktiviert ist, sodass die Steuerleitung (2) befestigt ist, bis der Stift (11) des inneren Anschlusses (5) innerhalb des länglichen Lochs (12) der Sicherheitsarretierung (10) eingefügt ist.

10. Befestigungsvorrichtung für Steuerleitungsanschlüsse nach einem der Ansprüche 1 bis 8, bei der die äußere diametrische Oberfläche des Endabschnitts des Schafts (3) und auch die innere halb-diametrische Oberfläche (19) des inneren Anschlusses (5) vielfache ringförmige Gewinde mit hohem Rückhaltevermögen aufweisen und, in der Befestigungsposition des Vorrichtung (1), die Oberflächengewinde des Schafts (3) zwischen den Gewinden des inneren Anschlusses (5) eingefügt sind, wodurch der Schaft (3), der zur Steuerleitung (2) gehört, mit einem hohen Blockierwiderstand versehen ist.

## Revendications

1. Dispositif de fixation (1) pour des bornes de câble de commande qui permet d'ajuster et de fixer la longueur de câbles flexibles à simple ou double action, utilisés pour la transmission de commandes à partir d'un élément mécanique émetteur à un élément mécanique récepteur, dans lequel ledit dispositif de fixation (1) est composé d'une gaine (4), à l'intérieur de laquelle une borne interne (5) et un actionneur de pression (8) sont assemblés, qui, par la rotation de la gaine (4), glisse de manière radiale dans une ouverture longitudinale (13) avec des parois parallèles de la borne interne (5) afin de verrouiller ou de libérer un arbre (3) qui est solidaire du câble (2), permettant ainsi de fixer ou de libérer ledit câble de commande (2) selon le sens de rotation de la gaine (4) actionnée manuellement par l'actionneur,
**caractérisé en ce que** la gaine (4) a un trou axial interne (9) dont une partie à rayon variable est en contact avec l'actionneur de pression (8), le rayon variable suit une courbe de type Archimède.

2. Dispositif de fixation pour des bornes de câbles de commande selon la revendication 1, dans lequel le support central (15) de l'actionneur de pression (8) est toujours maintenu en contact avec la partie à rayon variable du trou axial interne (9) de ladite gaine (4) par l'action de deux ressorts en forme d'aile (16) de l'actionneur de pression (8) sur le corps cylindrique (7) de la borne interne (5) de sorte que la distance entre la surface concave (17) d'un sabot (14) de l'actionneur de pression (8) et l'arbre (3) soit déterminée par le rayon du trou axial interne (9) de la gaine (4).

3. Dispositif de fixation pour des bornes de câbles de commande selon les revendications 1 ou 2, dans lequel la partie à rayon variable du trou axial interne (9) de la gaine (4) comprend une pluralité de secteurs angulaires successifs.

4. Dispositif de fixation pour des bornes de câbles de commande selon la revendication 3, dans lequel la partie à rayon variable du trou axial interne (9) de la gaine (4) comprend un premier secteur angulaire (20) ayant le plus grand rayon, permettant ainsi d'ajuster la longueur du câble (2).

5. Dispositif de fixation pour des bornes de câbles de commande selon la revendication 4, dans lequel la partie à rayon variable du trou axial interne (9) de la gaine (4) comprend un deuxième secteur angulaire (21) présentant une réduction rapide de rayon, permettant ainsi à l'actionneur (8) de s'approcher de l'arbre (3);

6. Dispositif de fixation pour des bornes de câbles de commande selon la revendication 5, dans lequel la partie à rayon variable du trou axial interne (9) de la gaine (4) comporte un troisième secteur angulaire (22) ayant ledit rayon à réduction progressive après une courbe de type Archimède, augmentant ainsi rapidement la force de blocage de l'arbre (3) du câble (2).

7. Dispositif de fixation pour des bornes de câbles de commande selon la revendication 6, dans lequel la partie à rayon variable du trou axial interne (9) de la gaine (4) comprend un quatrième secteur angulaire (23) ayant une réduction de rayon minimale d'où une augmentation minimale de serrage de l'arbre (3), de sorte à assurer une opération irréversible.

8. Dispositif de fixation pour des bornes de câble de commande selon l'une quelconque des revendications 4 à 7 dans lequel toute la séquence des secteurs angulaires prend moins d'un demi-tour de la gaine (4), permettant ainsi à la main de l'opérateur de réaliser l'opération de fixation entière en un seul mouvement de main.

9. Dispositif de fixation pour des bornes de câbles de commande de l'une quelconque des revendications 1 à 8, dans lequel un verrou de sécurité (10) solidaire de la gaine (4) est auto-activé à la fin de l'opération pour fixer le câble de commande (2) jusqu'à ce que la tige (11) de la borne interne (5) soit insérée à l'intérieur du trou oblong (12) du verrouillage de sécurité (10).

10. Dispositif de fixation pour des bornes de câbles de commande selon l'une quelconque des revendications 1 à 8, dans lequel la surface externe diamétrale de la partie d'extrémité de l'arbre (3), ainsi que la surface interne semi-diamétrale (19) de la borne interne (5), sont constituées par de multiples fils annulaires avec une grande capacité de rétention et qui, dans la position de fixation du dispositif (1), les fils de surface de l'arbre (3) sont insérés entre les fils de la borne interne (5), apportant ainsi à l'arbre (3), solidaire du câble de commande (2), une forte résistance de blocage.
